# EUROPEAN PATENT APPLICATION

(11) **EP 4 818 644 A1**
(43) Date of publication of application: **07.10.2026**
(21) Application number: 24899119.2
(22) Date of filing: 26.04.2024
(51) Int. Cl.: G01C 21/36, G01C 21/20

(54) **OUTPUT PATH PLANNING METHOD AND APPARATUS, AND ELECTRONIC DEVICE**

(30) Priority: 04.12.2023 CN 202311650254
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: CHEN, Yao, Hangzhou, Zhejiang 310051 (CN); YANG, Di, Hangzhou, Zhejiang 310051 (CN); QI, Huaiyu, Hangzhou, Zhejiang 310051 (CN)
(74) Representative: Murgitroyd & Company
(86) International application number: PCT/CN2024/089986
(87) International publication number: WO 2025/118467

(57) **Abstract**

The present disclosure provides a method, an apparatus and an electronic device for outputting a planned path, and the method includes: acquiring pose data and environment data of a vehicle at a current moment (S1); converting the pose data and the environment data into a description text (S2); converting the description text into a visual language text; and obtaining a path planning output result according to the visual language text (S3). According to the method, the visual language text is directly output as a path planning output result. In this way, path planning may be computed in a plurality of dimensions, thereby improving the accuracy of path planning.

## Description

### TECHNICAL FIELD

Embodiments of the present disclosure relate to the technical field of intelligent driving, and in particular, to an output path planning method and apparatus, and an electronic device.

### BACKGROUND

Currently, intelligent driving technologies of vehicles have been rapidly developed, and some vehicles can implement intelligent driving in a simple road environment, such as on expressways with light traffic.

### SUMMARY

The present disclosure provides a method and an apparatus for outputting a planned path, and an electronic device.

According to a first aspect, the present disclosure provides a method for outputting a planned path, where the method includes: acquiring current pose data and environment data of a vehicle, where the environment data includes high-precision map data and navigation data; converting the pose data and the environment data into a description text, where the description text is text data describing a current surrounding environment of the vehicle; converting the description text into a visual language text; and obtaining a path planning output result according to the visual language text.

Based on this approach, the visual language text can be directly used as the path planning output result, thereby enabling the computation of path planning in multiple dimensions, and further improving the accuracy of path planning.

In an optional embodiment, converting the pose data and the environment data into the description text includes: extracting one or more key pose tokens representing a current pose of the vehicle from the pose data, and using the one or more key pose tokens as a target token sequence; extracting one or more key location tokens representing a current location of the vehicle from the high-precision map data, and using the one or more key location tokens as a map token sequence; extracting one or more key navigation tokens containing a destination of the vehicle from the navigation data, and using the one or more key navigation tokens as a navigation token sequence; and performing text arrangement on the target token sequence, the map token sequence, and the navigation token sequence to generate the description text.

In an optional embodiment, converting the description text into a visual language text includes: performing visual language conversion on the target token sequence, the map token sequence, and the navigation token sequence to respectively obtain an environment token sequence, a behavior token sequence, and a result token sequence, where the environment token sequence is configured to describe the current surrounding environment of the vehicle, the behavior token sequence is configured to describe a current behavior of the vehicle, and the result token sequence is configured to describe a relationship between the environment token sequence and the behavior token sequence; and performing text arrangement on the environment token sequence, the behavior token sequence, and the result token sequence, to generate the visual language text containing the environment token sequence, the behavior token sequence, and the result token sequence.

In an optional embodiment, obtaining a path planning output result according to the visual language text includes: computing attention weights among the various classes of tokens in the visual language text by using an attention algorithm; rearranging the various classes of tokens in the visual language text based on the attention weights among the various classes of tokens, to obtain an output language text; and using the output language text as the path planning output result.

In an optional embodiment, rearranging the various classes of tokens in the visual language text based on the attention weights among the various classes of tokens, to obtain the output language text includes: generating a mode text corresponding to a current driving mode of the vehicle; and rearranging the various classes of tokens in the visual language text based on the mode text and the attention weights among the various classes of tokens, to obtain the output language text containing the mode text.

According to a second aspect, the present disclosure provides an apparatus for obtaining path planning output, where the apparatus includes: an acquiring unit, configured to: acquire current pose data and environment data of a vehicle, where the environment data includes high-precision map data and navigation data; a description text converting unit, configured to: convert the pose data and the environment data into a description text, where the description text is text data describing a current surrounding environment of the vehicle; and a processing unit, configured to: convert the description text into a visual language text, and obtain a path planning output result according to the visual language text.

In an optional embodiment, the description text converting unit is configured to: extract a key pose token sequence representing a current pose of the vehicle from the pose data, and use the key pose token sequence as a target token sequence; extract one or more key location tokens representing a current location of the vehicle from the high-precision map data, and use the one or more key location tokens as a map token sequence; extract one or more key navigation tokens containing a destination of the vehicle from the navigation data, and use the one or more key navigation tokens as a navigation token sequence; and perform text arrangement on the target token sequence, the map token sequence, and the navigation token sequence to generate the description text.

In an optional embodiment, the processing unit is configured to: compute attention weights among the various classes of tokens in the visual language text by using an attention algorithm; rearrange the various classes of tokens in the visual language text based on the attention weights among the various classes of tokens, to obtain an output language text; and use the output language text as the path planning output result.

According to a third aspect, the present disclosure provides an electronic device, including: a memory, configured to store a computer program; and one or more processors, configured to implement the method steps for obtaining path planning output according to any one of the foregoing methods when executing the computer program stored in the memory.

According to a fourth aspect, the present disclosure provides a computer-readable storage medium having a computer program stored thereon, where the computer program, when executed by one or more processors, implements the method steps for obtaining path planning output according to any one of the foregoing methods.

For various aspects of the second aspect to the fourth aspect and possible technical effects of the various aspects, please refer to the foregoing descriptions of the technical effects that can be achieved for the first aspect or the possible solutions of the first aspect, which are not repeated herein.

### BRIEF DESCRIPTION OF DRAWINGS

FIG. 1 is a flowchart of a method for outputting a planned path according to an embodiment of the present disclosure.
FIG. 2 is an architectural diagram of a system for outputting a planned path according to an embodiment of the present disclosure.
FIG. 3 is a diagram of a path planning display interface according to an embodiment of the present disclosure.
FIG. 4 is a structural diagram of an apparatus for outputting a planned path according to an embodiment of the present disclosure.
FIG. 5 is a structural diagram of an electronic device according to an embodiment of the present disclosure.

### DETAILED DESCRIPTION

To make the objectives, technical solutions, and advantages of the present disclosure clearer, the following further describes the present disclosure in detail with reference to the accompanying drawings. A specific operation method in the method embodiment may also be applied to an apparatus embodiment or a system embodiment. It should be noted that "a plurality of" in the descriptions of the present disclosure is understood as "at least two". "And/or" describes an association relationship of associated objects, indicating that three relationships may exist, for example, A and/or B may indicate three cases: A exists alone, both A and B exist, and B exists alone. A is connected to B, which may indicate two cases: A is directly connected to B and A is connected to B by C. In addition, in the descriptions of the present disclosure, terms such as "first" and "second" are merely used for distinguishing between descriptions, and shall not be understood as an indication or implication of relative importance or an indication or implication of a sequence.

The following describes embodiments of the present disclosure in detail with reference to the accompanying drawings.

Currently, intelligent driving technologies for vehicles have been rapidly developed, and some vehicles can implement intelligent driving in a simple road environment, such as on expressways with light traffic.

In an intelligent driving scenario, sensing and computation of a surrounding environment of a vehicle are completed with reference to various types of sensors and processors, and then path planning of the vehicle is implemented by using environment sensing data, navigation data, and pose data. At present, the mainstream path planning scheme is to select a planned path from a plurality of planned paths by using a post-processing algorithm. The selected planned path herein may achieve global optimality, maximum probability, or maximum safety, etc. However, the current path planning approach is obtained according to a post-processing algorithm, and such path planning approach uses fewer dimensions, resulting in an inaccurate final path planning result.

To resolve the foregoing technical problem, an embodiment of the present disclosure provides a method for outputting a planned path. In the method, pose data and environment data of a vehicle at a current moment are first acquired, the pose data and the environment data are converted into a description text, the description text is converted into a visual language text, and a path planning output result is obtained according to the visual language text. According to the method, path planning computation may be performed in a plurality of dimensions such as vehicle data, pose data, and environment data, to ensure that the path planning output result finally output and displayed in a text form is more accurate.

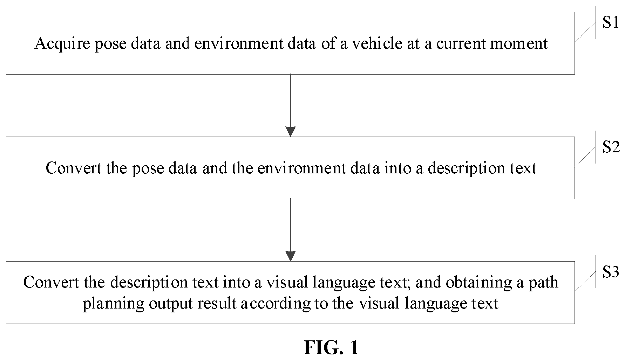

FIG. 1 is a flowchart of a method for outputting a planned path according to an embodiment of the present disclosure. As illustrated in FIG. 1, the method includes steps S1 to S3.

At step S1, pose data and environment data of a vehicle at a current moment are acquired.

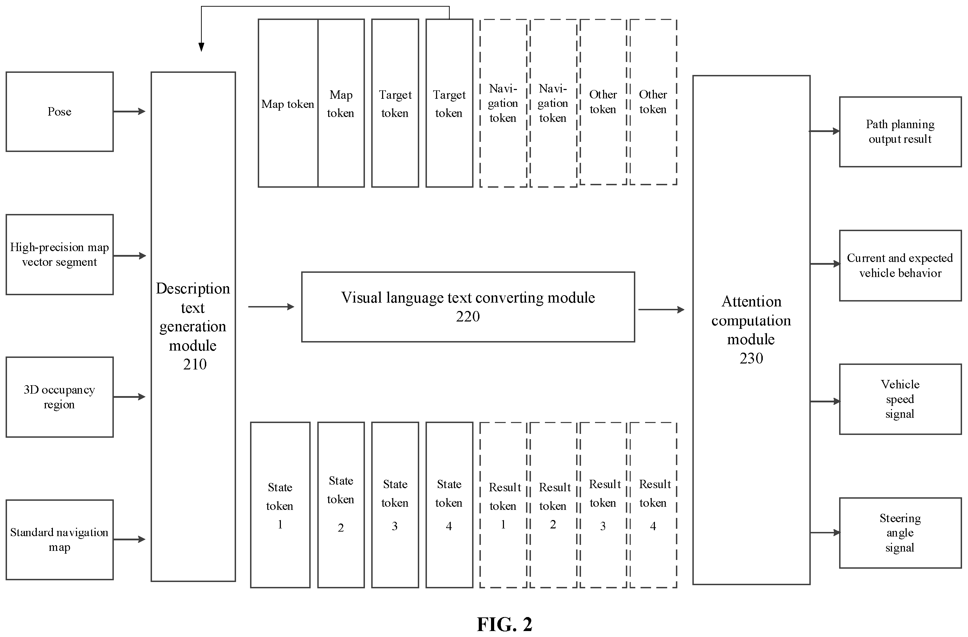

The method for outputting a planned path provided in embodiments of the present disclosure may be applied to the system architecture illustrated in FIG. 2. The system architecture includes: a description text generation module 210, a text analysis module (not illustrated in FIG. 2), and a visual language text converting module 220.

The text analysis module is configured to analyze the input data and extract different tokens from the input data. The tokens extracted by the text analysis module may be input to the description text generation module 210, and the description text generation module 210 is configured to encode the tokens extracted by the text analysis module to generate a description text. The visual language text converting module 220 is configured to receive the description text generated by the description text generating module 210 and convert the description text into the visual language text.

Specifically, the text analysis module first obtains input data, where the input data includes the current pose data of the vehicle and the environment data of the location where the vehicle is currently located. The environment data may contain high-precision map data and navigation data (e.g., a standard navigation map illustrated in FIG. 2). The high-precision map data may be a local high-precision map vector segment, and a local high-precision map around the current location of the vehicle may be determined by using the high-precision map vector segment.

In some embodiments, in addition to the high-precision map data and the navigation data, the environment data may further contain current 3D occupancy region data of the vehicle, and the 3D occupancy region data may accurately determine the current location of the vehicle and the region occupancy status.

In addition, in an embodiment of the present disclosure, in addition to the high-precision map data, the navigation data, and the 3D occupancy region data as described above, other related data of the vehicle at the current moment may be further added to the environment data, and no further examples are provided herein.

At step S2, the pose data and the environment data are converted into a description text.

In an embodiment of the present disclosure, after the pose data and the environment data are obtained, language analysis is first performed on the pose data and the environment data. Then, a key pose token sequence representing the current pose of the vehicle is extracted from the pose data, and the key pose token sequence may be a single token or may be composed of multiple tokens, which is not limited herein. Then, the key pose token sequence is used as a target token sequence. The target token sequence describes the current pose state of the vehicle.

The language analysis is performed on the high-precision map data in the environment data, and then one or more key location tokens representing the current location of the vehicle are extracted from the high-precision map data. The key token extraction method here may be implemented based on an existing text recognition method, or may be implemented by using a neural network model for key token extraction. Then, the extracted one or more key location tokens are used as a map token sequence, and the map token sequence describes current map data of the vehicle, for example, the current map data of the vehicle includes whether there are vehicles in the surroundings, whether there are pedestrians in the surroundings, the distances to the surrounding vehicles, and the distances to the pedestrians, etc.

The language analysis is performed on the navigation data, and then one or more key navigation tokens containing the departure and destination of the vehicle is extracted from the navigation data. The one or more key navigation tokens may be extracted according to the navigation data input by the user. For example, according to information such as a starting place and a destination input by the user, the one or more key navigation tokens is extracted and navigation path data is generated. Then, the one or more key navigation tokens is used as a navigation token sequence, and the navigation token sequence represents navigation-related information of the vehicle at the current moment, such as a starting position and an ending position of the vehicle, and a current travel path of the vehicle. It should be noted here that the navigation token sequence may include a plurality of key tokens, and content contained in the navigation token sequence is not limited herein.

The target token sequence, the map token sequence, and the navigation token sequence describe a travel state of the vehicle and a state of a surrounding environment at a current moment, such as a location, a direction, a speed, a lane in which the vehicle is located, a nearby vehicle, or a nearby pedestrian of the vehicle.

In addition to performing language analysis on the pose data, the high-precision map data, and the navigation data, the text analysis module may further perform language analysis on other data to obtain other tokens. Other tokens may include the vehicle's current driving mode, operating state, etc.

After the target token sequence, the map token sequence, and the navigation token sequence are obtained by using the text analysis module, the target token sequence, the map token sequence, and the navigation token sequence may be input to the description text generation module 210, and the description text generation module 210 first determines the correlations between the target token sequence, the map token sequence, and the navigation token sequence, which may be specifically obtained through correlation computation between tokens; and then rearranges the target token sequence, the map token sequence, and the navigation token sequence according to a result of the correlation computation, to generate a description text. Certainly, one or more transition tokens will be added in the process of arrangement, thereby ensuring the formation of a complete description text. In an embodiment, the description text generated according to the target token sequence, the map token sequence, and the navigation token sequence may be: "An intersection is located 200 meters ahead. Currently, there are 2 vehicles nearby at distances of 10 meters and 50 meters respectively. The rest being an open area, and the current ground has dashed lines allowing lane changes." By this approach, the description text of the vehicle's surrounding situation may be accurately determined.

At step S3, the description text is converted into a visual language text; and a path planning output result is obtained according to the visual language text.

Referring to the system architecture illustrated in FIG. 2, after the description text generation module 210 generates the description text, the description text is imported into the visual language text converting module 220. Then, the target token sequence, the map token sequence, and the navigation token sequence in the description text are reorganized into an environment token sequence, a behavior token sequence, and a result token sequence by using the visual language text converting module 220. In FIG. 2, the environment token sequence and the behavior token sequence may be collectively referred to as a state token sequence.

The visual language text converting module 220 is further configured to rearrange the text of the various classes of tokens, so as to arrange the environment token sequence, the behavior token sequence and the result token sequence into another text, and the another text is the visual language text.

It should be noted here that the environment token sequence is configured to describe the environment around the vehicle at a current moment, the behavior token sequence is configured to describe a current behavior of the vehicle, and the result token sequence is configured to describe a relationship between the environment token sequence and the behavior token sequence. Therefore, the visual language text is formed by the environment token sequence, the behavior token sequence and the result token sequence. In an embodiment of the present disclosure, the visual language text may be directly output as a path planning output result. By this approach, path planning may be computed in a plurality of dimensions, thereby improving the accuracy of path planning.

In some embodiments, the above method for outputting a planned path mainly performs language analysis processing on data, and the process may be completed by a graphics processing unit (GPU) without copying the data from the GPU to the Central Processing Unit (CPU) to complete the subsequent processing process, i.e., the CPU is no longer needed for computing, thereby eliminating data transmission between the CPU and the GPU, achieving efficient on-chip computing under the full GPU, and reducing the cost of data transmission.

In some embodiments, the above method for outputting a planned path may be performed by a control system of the vehicle, e.g., a controller on the vehicle. In some embodiments, the above method for outputting a planned path may be performed by a GPU in a control system of a vehicle, e.g., a GPU of a controller on the vehicle. In some embodiments, the above method for outputting a planned path may be performed by a server of a vehicle. For example, after the path planning output result is obtained, the server transmits the path planning output result to the vehicle, so that the voice system on the vehicle outputs the path planning output result.

In an embodiment of the present disclosure, the system architecture illustrated in FIG. 2 further includes an attention computation module 230, so that in addition to a path planning output result, current and expected vehicle behavior data, a vehicle speed signal, a steering angle signal, etc., can be obtained by using an attention mechanism algorithm. Of course, which signals need to be obtained may be set according to actual application scenarios, and no further examples are provided herein.

In an embodiment of the present disclosure, to improve accuracy of the path planning result which is finally output, after the visual language text converting module 220 obtains the visual language text, the visual language text may be output to the attention computation module 230, and the attention computation module 230 may decompose the various classes of tokens in the visual language text, and then compute attention weights among the various classes of tokens in the visual language text by using an attention algorithm, where the attention weights represent correlations between the tokens.

The attention computation module 230 may output the attention weights among the various classes of tokens in the visual language text to the visual language text converting module 220. The visual language text converting module 220 rearranges the various classes of tokens in the visual language text based on the attention weights among the various classes of tokens to obtain an output language text, and uses the output language text as a path planning output result.

That is, the correlations between tokens can be determined through the attention mechanism, so that the order of the tokens can be determined through the correlations, thereby rearranging the tokens in the visual language text to obtain the final output result.

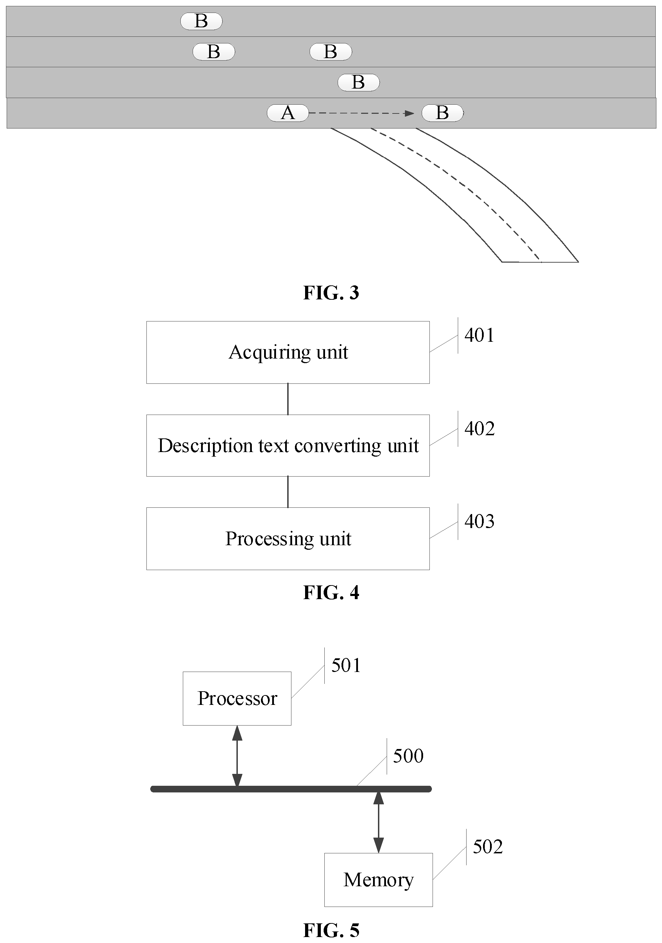

For example, as illustrated in FIG. 3, vehicle A is a current vehicle, vehicles B are other road participants, and a grey area on the ground represents high-precision map and standard map points. For example, at the current moment, the final path planning output result may be described as: "The vehicle is currently at an intersection, and the standard map navigation instructs to go straight. A vehicle exists ahead nearby, traveling straight at a speed of 30 km/h. A vehicle also exists on the left side, traveling straight at a speed of 30 km/h. Lane change is not allowed on the right side. Based on safety considerations, the vehicle is advised to follow the vehicle ahead and go straight at 25 km/h".

It can be seen from the above example that after the analysis and processing of the pose data, the navigation data and the map data, the final output result is the path planning output result in the form of visual language text. Moreover, after the analysis and processing of the attention mechanism is added, the correlations between tokens may be higher, so that the final path planning output result is more accurate.

In an embodiment of the present disclosure, when the attention weights among various classes of tokens are computed by using the attention mechanism, other information (e.g., driving mode of the vehicle) of the vehicle at the current moment may be further added. Therefore, after the driving mode of the vehicle at the current moment is obtained, a mode text (e.g., aggressive mode, moderate mode, safety mode, etc.) corresponding to the driving mode is generated. The various classes of tokens in the visual language text are rearranged based on the attention weights between the various classes of tokens and the mode text, to obtain the output language text containing the mode text. By this approach, other information may be added to the final path planning output result, so that the final path planning output result better conforms to a driving habit of the driver, which improves the driver's experience.

The text analysis module, the description text generation module, the visual language text converting module, and the attention module in the embodiments of the present disclosure may be implemented by computer-executable instructions.

Based on the same inventive concept, an embodiment of the present disclosure further provides an apparatus for outputting a planned path, referring to FIG. 4, which is a structural diagram of an apparatus for outputting a planned path according to an embodiment of the present disclosure. The apparatus includes:
an acquiring unit 401 configured to: acquire current pose data and environment data of a vehicle, where the environment data comprises high-precision map data and navigation data;
a description text converting unit 402 configured to: convert the pose data and the environment data into a description text, where the description text is text data describing a current surrounding environment of the vehicle; and
a processing unit 403 configured to: convert the description text into a visual language text, and obtain a path planning output result according to the visual language text.

In an optional embodiment, the description text converting unit 402 is specifically configured to:
extract a key pose token sequence representing a current pose of the vehicle from the pose data, and use the key pose token sequence as a target token sequence;
extract one or more key location tokens representing a current location of the vehicle from the high-precision map data, and use the one or more key location tokens as a map token sequence;
extract one or more key navigation tokens containing a destination of the vehicle from the navigation data, and use the one or more key navigation tokens as a navigation token sequence; and
perform text arrangement on the target token sequence, the map token sequence, and the navigation token sequence to generate the description text.

In an optional embodiment, the processing unit 403 is specifically configured to: compute attention weights among the various classes of tokens in the visual language text by using an attention algorithm; and
rearrange the various classes of tokens in the visual language text based on the attention weights among the various classes of tokens, to obtain an output language text; and use the output language text as the path planning output result.

Based on the same inventive concept, an embodiment of the present disclosure further provides an electronic device, where the electronic device may implement functions of the foregoing apparatus for outputting a planned path. Referring to FIG. 5, the electronic device includes the components described below.

At least one processor 501 and a memory 502 connected to the at least one processor 501 are provided, where a specific connection medium between the processor 501 and the memory 502 is not limited in the embodiments of the present application, and FIG. 5 illustrates an example in which the processor 501 and the memory 502 are connected through a bus 500. The bus 500 is represented by a thick line in FIG. 5, and a connection manner between other components is merely an example for description, and is not limited thereto. The bus 500 may be classified into an address bus, a data bus, a control bus, etc., and for ease of representation, only one thick line is configured to represent the bus in FIG. 5, but it does not mean that there is only one bus or one type of bus. Alternatively, the processor 501 may also be referred to as a controller, and the name is not limited.

In an embodiment of the present disclosure, the memory 502 stores instructions that can be executed by the at least one processor 501, and the at least one processor 501 may perform, by executing the instructions stored in the memory 502, the foregoing method for outputting a planned path. The processor 501 may implement functions of the modules in the apparatus illustrated in FIG. 4.

The processor 501 serves as a control center of the apparatus, and is capable of connecting various components of the entire apparatus through various interfaces and lines. By running or executing instructions stored in the memory 502 and invoking data stored in the memory 502, the processor implements various functions and processes data of the apparatus, thereby performing overall monitoring of the apparatus.

In a possible design, the processor 501 may include one or more processing units, the processor 501 may integrate an application processor and a modem processor, the application processor mainly processes an operating system, a user interface, an application program, etc., and the modem processor mainly processes wireless communication. It may be understood that the modem processor may alternatively not be integrated into the processor 501. In some embodiments, the processor 501 and the memory 502 may be implemented on a same chip, or in some embodiments, they may be separately implemented on separate chips.

The processor 501 may be a general-purpose processor, for example, a central processing unit, a graphics processing unit (GPU), a digital signal processor, an application-specific integrated circuit, a field programmable gate array or another programmable logic device, a discrete gate or a transistor logic device, or a discrete hardware component, and may implement or perform the methods, steps, and logical block diagrams disclosed in the embodiments of the present disclosure. The general-purpose processor may be a microprocessor, any conventional processor, or the like. The steps of the method for outputting a planned path disclosed with reference to the embodiments of the present disclosure may be directly performed by a hardware processor, or may be performed by using a combination of hardware and software modules in the processor.

As a non-volatile computer-readable storage medium, the memory 502 may be configured to store non-volatile software programs, non-volatile computer-executable programs and modules. The memory 502 may include at least one type of storage medium, e.g., a flash memory, a hard disk, a multimedia card, a card-type memory, a random access memory (RAM), a static random access memory (SRAM), a programmable read-only memory (PROM), a read-only memory (ROM), an electrically erasable programmable read-only memory (EEPROM), a magnetic memory, a magnetic disk, and an optical disk. The memory 502 is any other medium that can be configured to carry or store expected program code in a form of an instruction or a data structure and that can be accessed by a computer, but is not limited thereto. The memory 502 in this embodiment of the present disclosure may alternatively be a circuit or any other apparatus that can implement a storage function, and is configured to store program instructions and/or data.

By designing and programming the processor 501, code corresponding to the method for outputting a planned path described in the foregoing embodiments may be solidified into the chip, so that the chip can perform the steps of the method for outputting a planned path in the embodiment illustrated in FIG. 1 when running. The design and programming of the 501 processor are well-known to those skilled in the art and will not be described in detail herein.

Based on the same inventive concept, an embodiment of the present disclosure further provides a storage medium, where the storage medium stores computer instructions, and when the computer instructions are run on a computer, the computer is enabled to perform the foregoing method for outputting a planned path.

In some possible implementations, aspects of the method for outputting a planned path provided in the present disclosure may be further implemented in a form of a program product, including program code, where when the program product runs on an apparatus, the program code is configured to enable the control device to perform the steps in the method for outputting a planned path according to various example implementations of the present disclosure described in this specification.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. In addition, the present disclosure may use a form of a computer program product implemented on one or more computer-usable storage media (including but not limited to a disk memory, a CD- ROM, an optical memory, and the like) that contain computer-usable program code.
the present disclosure is described with reference to flowcharts and/or block diagrams of the method, the device (system), and the computer program product according to the embodiments of the present disclosure. It will be understood that each process and/or block of the flowchart illustrations and/or block diagrams, and combinations of processes and/or blocks in the flowchart illustrations and/or block diagrams, can be implemented by computer program instructions. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing functions specified in one or more processes in the flowcharts and/or one or more blocks in the block diagrams.

These computer program instructions may also be stored in a computer-readable memory that can guide a computer or another programmable data processing device to work in a specific manner, so that the instructions stored in the computer-readable memory generate a product including an instruction apparatus, and the instruction apparatus implements a function specified in one or more processes in the flowcharts and/or one or more blocks in the block diagrams.

These computer program instructions may also be loaded onto a computer or other programmable data processing device to cause a series of operational steps to be performed on the computer or other programmable device to produce computer-implemented processing, such that the instructions executed on the computer or other programmable device provide steps for implementing the functions specified in one or more flows of the flowcharts and/or one or more blocks of the block diagrams.

Obviously, a person skilled in the art can make various modifications and variations to the present disclosure without departing from the spirit and scope of the present disclosure. The present disclosure is intended to cover these modifications and variations provided that they fall within the scope of protection defined by the following claims and their equivalent technologies.

## Claims

1. A method for outputting a planned path, comprising:
acquiring pose data and environment data of a vehicle at a current moment, wherein the environment data comprises high-precision map data and navigation data;
converting the pose data and the environment data into a description text, wherein the description text is text data describing a current surrounding environment of the vehicle;
converting the description text into a visual language text; and
obtaining a path planning output result according to the visual language text.

2. The method according to claim 1, wherein converting the pose data and the environment data into the description text comprises:
extracting one or more key pose tokens representing a current pose of the vehicle from the pose data, and using the one or more key pose tokens as a target token sequence;
extracting one or more key location tokens representing a current location of the vehicle from the high-precision map data, and using the one or more key location tokens as a map token sequence;
extracting one or more key navigation tokens containing a destination of the vehicle from the navigation data, and using the one or more key navigation tokens as a navigation token sequence; and
performing text arrangement on the target token sequence, the map token sequence, and the navigation token sequence to generate the description text.

3. The method according to claim 2, wherein converting the description text into the visual language text comprises:
performing visual language conversion on the target token sequence, the map token sequence, and the navigation token sequence to respectively obtain an environment token sequence, a behavior token sequence, and a result token sequence, wherein the environment token sequence is configured to describe the current surrounding environment of the vehicle, the behavior token sequence is configured to describe a current behavior of the vehicle, and the result token sequence is configured to describe a relationship between the environment token sequence and the behavior token sequence; and
performing text arrangement on the environment token sequence, the behavior token sequence, and the result token sequence, to generate the visual language text containing the environment token sequence, the behavior token sequence, and the result token sequence.

4. The method according to claim 1, wherein obtaining the path planning output result according to the visual language text comprises:
computing attention weights among various classes of tokens in the visual language text by using an attention algorithm;
rearranging the various classes of tokens in the visual language text based on the attention weights among the various classes of tokens, to obtain an output language text; and
using the output language text as the path planning output result.

5. The method according to claim 4, wherein rearranging the various classes of tokens in the visual language text based on the attention weights among the various classes of tokens, to obtain the output language text comprises:
generating a mode text corresponding to a current driving mode of the vehicle; and
rearranging the various classes of tokens in the visual language text based on the mode text and the attention weights among the various classes of tokens, to obtain the output language text containing the mode text.

6. An apparatus for outputting a planned path, comprising:
an acquiring unit, configured to: acquire current pose data and environment data of a vehicle, wherein the environment data comprises high-precision map data and navigation data;
a description text converting unit, configured to: convert the pose data and the environment data into a description text, wherein the description text is text data describing a current surrounding environment of the vehicle; and
a processing unit, configured to: convert the description text into a visual language text, and obtain a path planning output result according to the visual language text.

7. The apparatus according to claim 6, wherein the description text converting unit is configured to:
extract a key pose token sequence representing a current pose of the vehicle from the pose data, and use the key pose token sequence as a target token sequence;
extract one or more key location tokens representing a current location of the vehicle from the high-precision map data, and use the one or more key location tokens as a map token sequence;
extract one or more key navigation tokens containing a destination of the vehicle from the navigation data, and use the one or more key navigation tokens as a navigation token sequence; and
perform text arrangement on the target token sequence, the map token sequence, and the navigation token sequence to generate the description text.

8. The apparatus according to claim 6, wherein the processing unit is configured to:
compute attention weights among the various classes of tokens in the visual language text by using an attention algorithm;
rearrange the various classes of tokens in the visual language text based on the attention weights among the various classes of tokens, to obtain an output language text; and
use the output language text as the path planning output result.

9. An electronic device, comprising:
a memory, configured to store a computer program; and
one or more processors, configured to implement the method steps according to any one of claims 1-5 when executing the computer program stored in the memory.

10. A computer-readable storage medium having a computer program stored thereon, wherein the computer program, when executed by one or more processors, implements the method steps according to any one of claims 1-5.
